# EUROPEAN PATENT SPECIFICATION

(11) **EP 4 104 680 B1**
(45) Date of publication and mention of the grant of the patent: **16.07.2025**
(21) Application number: 21203523.2
(22) Date of filing: 19.10.2021
(51) Int. Cl.: A21D 2/26, A21D 10/00, A21D 13/045

(54) **CAKE MIX**
KUCHENMISCHUNG
MÉLANGE POUR PÂTISSERIE

(43) Date of publication of application: 21.12.2022
(73) Proprietor: DSM IP Assets B.V., 6221 BE Maastricht (NL)
(72) Inventor: SEIN, Arjen, 6100 AA Echt (NL)
(74) Representative: dsm-firmenich IP

(56) References cited:
- US-A1- 2012 121 758
- DANIELA VON DER HAAR ET AL: "Rapeseed proteins - Production methods and possible application ranges", OCL, vol. 21, no. 1, 1 January 2014 (2014-01-01), pages D104, XP055401498, DOI: 10.1051/ocl/2013038
- ANONYMOUS: "You'll flip for this high-protein vegan pancake mix concept!", 19 August 2021 (2021-08-19), www.linkedin.com, pages 1 - 1, XP055880938, Retrieved from the Internet <URL:http://web.archive.org/web/20210819170523/https://www.linkedin.com/posts/merit-functional-foods_merit-functional-foods-we-help-unlock-better-activity-6833802039575789569-h6D_/> [retrieved on 20220119]
- ANONYMOUS: "Burcon NutraScience: Achieved Several Key Milestones In 1H 2021, Significant Opportunity Ahead", 3 September 2021 (2021-09-03), www.seekingalpha.com, pages 1 - 45, XP055879467, Retrieved from the Internet <URL:https://seekingalpha.com/article/4453457-burcon-nutrascience-achieved-several-key-milestones-in-1h21-significant-opportunity-ahead> [retrieved on 20220114]
- CASPER JEFF: "A tough egg to crack: Using canola protein to replace eggs in bakery formulations", FOOD & BEVERAGE INSIDER, vol. 2, no. 3, 1 May 2021 (2021-05-01), pages 1, 20 - 22, XP055879928
- MEJIA LUIS A: "GRAS Notification for the ADM/Burcon NutraScience Canola Protein Isolates Puratein and Supertein", GRAS NOTICE NO. 327, 22 February 2017 (2017-02-22), www.fda.gov, pages 1 - 210, XP055881023, Retrieved from the Internet <URL:http://web.archive.org/web/20170222010158if_/https://www.fda.gov/downloads/Food/IngredientsPackagingLabeling/GRAS/NoticeInventory/ucm269508.pdf> [retrieved on 20220119]
- BOOT ANNEKE: "GRAS Notification: the use of Canola/Rapeseed protein isolate as a nutritive and function ingredient in human food", 26 October 2020 (2020-10-26), https://www.fda.gov/media/103212/download, pages 1 - 302, XP055878887, Retrieved from the Internet <URL:http://web.archive.org/web/20201026025048if_/https://www.fda.gov/media/103212/download> [retrieved on 20220113]
- SANCHEZ MARC C.: "The safety and the generally recognized as safe (GRAS) status of the proposed use of pea protein in human food - GRAS Notice (GRN) No. 804", 15 March 2021 (2021-03-15), www.fda.gov/media/133517/download, pages 1 - 270, XP055886042, Retrieved from the Internet <URL:http://web.archive.org/web/20210315003339if_/https://www.fda.gov/media/133517/download> [retrieved on 20220201]
- CHMIELEWSKA ANNA ET AL: "Canola/rapeseed protein ? nutritional value, functionality and food application: a review", CRITICAL REVIEWS IN FOOD SCIENCE AND NUTRITION, 10 September 2020 (2020-09-10), USA, pages 1 - 21, XP055783398, ISSN: 1040-8398, Retrieved from the Internet <URL:https://www.researchgate.net/profile/Justyna_Rosicka/publication/344221948_Canolarapeseed_protein_-_nutritional_value_functionality_and_food_application_a_review/links/5fa57f8f299bf10f7329289b/Canola-rapeseed-protein-nutritional-value-functionality-and-food-application-a-review.pdf> DOI: 10.1080/10408398.2020.1809342
- TANG YAN RAN ET AL: "Canola protein thermal denaturation improved emulsion-templated oleogelation and its cake-baking application", RSC ADVANCES, vol. 11, no. 41, 19 July 2021 (2021-07-19), pages 25141 - 25157, XP055887325, Retrieved from the Internet <URL:https://pubs.rsc.org/en/content/articlepdf/2021/ra/d1ra02250d> DOI: 10.1039/D1RA02250D

## Description

### Field of the invention

This invention relates to a cake mix and a method to prepare a cake from said cake mix. Further, the present invention relates to the use of rapeseed protein in the production of a vegan cake.

### Background of the invention

Cake is known for a long time and is prepared in numerous varieties. Most cakes are made with wheat flour and therefore have some amount of gluten, which means special care needs to be taken to ensure cakes don't have a chewy texture. The cake ingredients are mixed as little as possible once the flour has been added. This differs markedly from sturdy food items made with flour such as bread, where the goal is to agitate the gluten as much as possible. The wheat flour selected to be used for cakes is often one naturally lower in gluten.

Typical cake ingredients are wheat flour, eggs and sugar. Optionally, baking powder, water, and/or fat - such as for example butter, margarine and or oil are added.

Cakes often rely on beating eggs and addition of leavening agents, such as baking powder, to produce the air bubbles in the cake. This is what makes a traditional cake fluffy and sponge-like. Therefore, the type of cake ingredients and the ratio between them are important in determining cake properties such as e.g. crumb structure and cake volume.

It is known that eating of too many eggs can have detrimental effects on health, for example by increasing cholesterol. Eggs are also allergenic. Further, the production of eggs has negative effects on climate change.

Therefore, vegan products become increasingly popular. However, replacing egg by plant protein provide challenges on the cake. For example, plant protein-based cakes, such as pea-based cakes, suffer from low cake volume, and a colour that does not match egg-based cake.

The company Merit Functional Foods is producing non-GMO Puratein^{®} C canola protein and Peazazz^{®} pea protein, which allow formulators to create an egg-free pancake mix that offers up to 14g of plant-based protein per serving, and cooks-up like traditional pancakes with soft, fluffy texture, excellent volume and structure (http://web.archive.org/web/20210819170523/https:// www.linkedin.com/posts/merit-functional-foods_merit-functional-foods-we-help-unlock-better-activity-6833802039575789569-h6D_/) ; (https://seekingalpha.com/article/4453457-burcon-nutrascience-achieved-several-key-milestones-in-1h21-significant-opportunity-ahead).

Thus, there is a need in the art for cake mixes that solve these problems.

### Description of the invention

The present invention relates to a cake mix comprising:
i. sugar;
ii. flour; and/or
iii. pea protein and rapeseed protein;
wherein the ratio of pea protein to rapeseed protein is within the range of 61:39 to 94:6 w/w, preferably 71:29 to 94:6 w/w.

Surprisingly, the present inventors found that a cake mix comprising both pea protein and rapeseed protein increases the volume of the cake, and provides a colour that is comparable to egg based cakes.

The term cake mix as used in the present context means a dry powder blend that is suitable for preparing a batter for baking a cake.

The present invention covers all types of cake mixes, including mixes for shortened cakes, such as for example pound cake and butter cake, and including foam cakes, such as for example sponge cake, biscuit cake, roulade, genoise, muffin and chiffon cake. Preferably the present cake mix is a sponge cake mix, or phrased differently, a cake mix suitable for the baking of sponge cakes.

Sponge cake is a type of soft cake based on wheat flour, sugar, baking powder and eggs (and optionally baking powder). It is often used as a base for other types of cakes and desserts. A non-vegan sponge cake is made by beating the eggs with sugar until they are light and creamy, then carefully sieving and folding in the flour (which may be mixed with a small amount of baking powder, although the air incorporated into the egg mixture can be sufficient for a good rise). Sometimes, the yolks are beaten with the sugar first while the whites are beaten separately, to be mixed in later. The mixture is then poured into the chosen cake tin and baked. Before the product is fully cooled down after cooking, it is still flexible. This allows the creation of such varieties as the Swiss roll. This basic recipe is used for many treats and puddings, such as madeleines.

A pound cake is traditionally prepared of one pound each of flour, butter, eggs, and sugar, optionally complemented with baking powder.

In chiffon cake the butter/margarine has been replaced by oil. Sugar and egg yolk content has been decreased compared to pound or sponge cake and egg white content has been increased.

Preferably, the present cake mix is a vegan cake mix. A vegan cake mix is a mix for preparing a cake suitable to be consumed by vegan consumers. Preferably the present cake mix does not comprise animal protein. Preferably the present cake mix does not comprise eggs, egg protein, egg white and/or egg yolk.

Preferably, the present ratio of pea protein to rapeseed protein is within the range of 62:38 to 93:7 (w/w), 63:37 to 92:8 (w/w), 64:36 to 91:9 (w/w), 65:35 to 90:10 (w/w), 66:34 to 89:11 (w/w); 67:33 to 88:12 (w/w); 75:25 to 87:13 (w/w) or 75:25 to 86:14 (w/w).

Preferably, the present ratio of pea protein to rapeseed protein is within the range of 71:29 to 94:6 (w/w), 72:28 to 93:7 (w/w), 73:27 to 92:8 (w/w), 74:26 to 91:9 (w/w), 75:25 to 90:10 (w/w), 75:25 to 89:11 (w/w); 75:25 to 88:12 (w/w); 75:25 to 87:13 (w/w) or 75:25 to 86:14 (w/w). Preferably is within the range of 80:20 to 94:6 (w/w), 81:19 to 93:7 (w/w), 82:18 to 92:8 (w/w), 83:17 to 91:9 (w/w), 84:16 to 90:10 (w/w), 85:15 to 89:11 (w/w); 86:14 to 88:12 (w/w).

In a preferred embodiment, the present ratio of pea protein to rapeseed protein is within the range of 75:25 to 90:10 (w/w). Preferably, the present ratio of pea protein to rapeseed protein is within the range of 76:24 to 89:11 (w/w), 77:23 to 88:12 (w/w); 78:22 to 87:13 (w/w); 79:21 to 86:14 (w/w) or 80:20 to 90:10 (w/w). Preferably, the present ratio of pea protein to rapeseed protein is within the range of 75:25 to 85:15, 76:24 to 84:16 (w/w), 77:23 to 83:17 (w/w); 78:22 to 82:18 (w/w) or 79:21 to 81:19 (w/w).

In a preferred embodiment, the sum of the pea protein and rapeseed protein is between 1 and 10 wt. % on dry matter of the cake mix. Preferably between 1.5 and 8 wt. %, between 2.0 and 5 wt. % or 2.5 to 4 wt. % on dry matter of the cake mix.

The rapeseed used to obtain the rapeseed protein as applied in the instant invention is usually of the varieties *Brassica napus* or *Brassica juncea.* These varieties contain low levels of erucic acid and glucosinolates, and are the source of canola, a generic term for rapeseed oil comprising less than 2% erucic acid and less than 30 mmol/g glucosinolates. The predominant storage proteins found in rapeseed are cruciferins and napins. Cruciferins are globulins and are the major storage protein in the seed. A cruciferin is composed of 6 subunits and has a total molecular weight of approximately 300 kDa. Napins are albumins and are low molecular weight storage proteins with a molecular weight of approximately 14 kDa. Napins are more easily solubilized and are primarily proposed for use in applications where solubility is key. Preferably the present rapeseed protein is a rapeseed protein isolate.

In a preferred embodiment, the present rapeseed protein (isolate) comprises 40 to 65 wt. % cruciferins and 35 to 60 wt. % napins (of the rapeseed protein). Preferably, the present rapeseed protein comprises 40 to 55 wt. % cruciferins and 45 to 60 wt. % napins.

In a preferred embodiment, the present rapeseed protein (isolate) comprises 60 to 80 wt. % cruciferins and 20 to 40 wt. % napins. Preferably, the present rapeseed protein comprises 65 to 75 wt. % cruciferins and 25 to 35 wt. % napins.

In a preferred embodiment, the present rapeseed protein (isolate) comprises 0 to 10 wt. % cruciferins and 90 to 100 wt. % napins. Preferably, the present rapeseed protein comprises 1 to 5 wt. % cruciferins and 95 to 100 wt. % napins.

Preferably, the amounts of cruciferins and napins are calculated based on the total amount of protein in the present cake mix. Or alternatively, the amounts of cruciferins and napins are calculated based on the sum of cruciferins and napins present in the cake mix. Preferably, the amounts of cruciderins and napins are determined by size exclusion chromatography (SEC). Preferably, the amounts of cruciderins and napins are determined by size exclusion chromatography (SEC) using the following test:
samples of protein isolate are dissolved in a 500 mM NaCl saline solution and analyzed by High Performance SEC using the same solution as the mobile phase, followed by detection using measuring UV absorbance at 280 nm, wherein the relative contribution of cruciferin and napin (wt. %) was calculated as the ratio of the peak area of each protein with respect to the sum of both peak areas.

Preferably, the present rapeseed protein (isolate) comprises 40 to 65 wt. % 12S and 35 to 60 wt. % 2S. Preferably, the present rapeseed protein comprises 40 to 55 wt. % 12S and 45 to 60 wt. % 2S.

In a preferred embodiment, the present rapeseed protein (isolate) comprises 60 to 80 wt. % 12S and 20 to 40 wt. % 2S. Preferably, the present rapeseed protein comprises 65 to 75 wt. % 12S and 25 to 35 wt. % 2S.

In a preferred embodiment, the present rapeseed protein (isolate) comprises 0 to 10 wt. % 12S and 90 to 100 wt. % 2S. Preferably, the present rapeseed protein comprises 1 to 5 wt. % 12S and 95 to 100 wt. % 2S.

Preferably, the amounts of 12S and 2S is determined by sedimentation velocity analytical ultracentrifugation (SV-AUC) analysis. Preferably, the amounts of 12S and 2S is determined by sedimentation velocity analytical ultracentrifugation (SV-AUC) analysis using the following test:
samples of protein isolate are dissolved in a 3.0% (or 500 mM) NaCl saline solution and amounts determined using interference optics.

In a preferred embodiment, the present rapeseed protein (isolate) comprises a conductivity in a 2 wt.% aqueous solution of less than 9000 µS/cm over a pH range of 2 to 12. More preferably the conductivity of the native rapeseed protein isolate in a 2 wt. % aqueous solution is less than 4000 µS/cm over a pH range of 2.5 to 11.5. For comparison the conductivity of a 5 g/l NaCl aqueous solution is around 9400 µS/cm. Preferably conductivity is measured with a conductivity meter, for example Hach sensION+ EC71.

In a preferred embodiment, the present rapeseed protein (isolate) comprises a solubility of at least 88 % when measured over a pH range from 3 to 10 at a temperature of 23 +/-2 °C. Preferably a solubility of at least 90, 91, 92, 93, 94, 95, 96, 97, 98 or at least 99% over a pH range from 3 to 10 at a temperature of 23 +/-2 °C. This is also known as the soluble solids index (SSI).

Preferably, solubility is calculated by: Protein solubility (%) = (concentration of protein in supernatant (in g/l) / concentration of protein in total dispersion (in g/l)) x 100.

Preferably, the solubility is measured using the following test:
- sufficient protein to supply 0.8 g of protein is weighed into a beaker;
- a small amount of demineralized water is added to the powder and the mixture is stirred until a smooth paste is formed;
- additional demineralized water is then added to make a total weight of 40 g (yielding a 2 % w/w protein dispersion);
- the dispersion is slowly stirred for at least 30 min using a magnetic stirrer;
- afterwards the pH is determined and adjusted to the desired level (2, 3, 4, etc.) with NaOH or HCl;
- the pH of the dispersion is measured and corrected periodically during 60 minutes stirring;
- after 60 minutes of stirring, an aliquot of the protein dispersion is reserved for protein concentration determination (Kjeldahl analysis; Kjeldahl N x 6.25), another portion of the sample is centrifuged at 20,000 G for 2 min;
- the supernatant and pellet are separated after centrifugation;
- the protein concentration of the supernatant is also determined by Kjeldahl analysis (Kjeldahl N x 6.25);
- and protein solubility is calculated by:
Protein solubility (%) = (concentration of protein in supernatant (in g/l) / concentration of protein in total dispersion (in g/l)) x 100.

For use in human food consumption the removal of phytates, phenolics (or polyphenolics) and glucosinolates prevents unattractive flavour and coloration and prevents decreased nutritional value of the protein isolate. At the same time this removal enhances the protein content of the protein isolate.

In a preferred embodiment, the present rapeseed protein (isolate) has a phytate level less than 5 wt.%, preferably less than, 4, 3, 2, 1, 0.5, 0.4, 0.3, 0.2. 0.1 or less than 0.01 wt. %. Alternatively, the present rapeseed protein (isolate) has a phytate level of 0.01 to 4, 0.05 to 3, 0.1 to 1 wt.%. Preferably the phytate level is measured using method QD495, based on Ellis et al, Analytical Biochemistry Vol. 77:536-539 (1977).

In a preferred embodiment, the present rapeseed protein (isolate) has a phenolic content of less than 1 wt.% on dry matter expressed as sinapic acid equivalents. Preferably less than 0.9, 0.8, 0.7, 0.6, 0.5, 0.4, 0.3, 0.2, 0.1, 0.05 or less than 0.01 wt.% on dry matter expressed as sinapic acid equivalents.

In a preferred embodiment, the present rapeseed protein (isolate) comprises < 10 ppm gliadin. Preferably the rapeseed protein (isolate) comprises less than 5 ppm gliadin and most preferably no gliadin can be detected. Preferably, gliadin content is determined using sandwich ELISA from R-Biopharm (cat no R7001, lot 14434) used according to the manufacturer's instructions to determine the gliadin ppm in extracts.

Pea protein, obtained from yellow pea *Pisum sativum,* is also a mixture of various proteins (see for instance Lam et al. Food Rev. International 2018 34(2) p126-147), consisting of globulins (70-80%) and albumins (10-20%). The globulin fraction consists of several proteins: Legumin (11S, 300-400 kDa), vicilin (7S, 150-170 kDa) and convicilin (210 kDa as trimer), the water-soluble albumin fraction consists of proteins with molecular masses up to 80 kDa comprising enzymes protease- and amylase inhibitors and lectins. Furthermore, a small fraction consists of among others prolamins and glutenins. The method of extraction highly influences the composition of the protein concentrate or isolate, as well as its physico-chemical properties and its flavour. The general process for producing a pea protein isolate is known in the art and described for instance by Frederikson et al. (J. Agric. Food Chem. 2001, 49, p1208-1212 Production Process for High-Quality Pea-Protein Isolate with Low Content of Oligosaccharides and Phytate). Several industrial methods to obtain isolates are described such as WO2020221978 (Gelling leguminous protein), US2020229462 (Pea protein composition having improved nutritional quality), EP3071045 B1 (Method for extracting pea proteins), US2020281224 (Product analogs or components of such analogs and processes for making same). Next to pea protein isolates and pea protein concentrates, usually obtained by a wet extraction process, also dry fractionation can be used to obtain a protein-enriched pea flour. Dry fractionation may occur by processes such as wind sifting or electrostatic separation. Preferably the pea protein is a pea protein isolate.

In a preferred embodiment, the rapeseed protein is a rapeseed protein isolate and/or the pea protein is a pea protein isolate.

In addition to the present rapeseed protein and pea protein, the present cake mix composition may comprise another plant-based protein, such as proteins from legumes and pulses such as, fava bean protein, chickpea protein, lupin protein, lentil protein, mung bean protein, peanut; or seed proteins such as cotton seed protein, sunflower seed protein, sesame seed protein, camelina; cereal or pseudo cereal protein, such as oat protein, rice protein, corn protein, sorghum protein, quinoa protein, buckwheat; leaf protein such as alfalfa protein, clover protein, duckweed protein, grass protein; protein from stem or root tuber protein such as potato protein, sweet potato protein, cassava protein, yam protein, taro protein; protein derived from nuts, such as almond, hazelnut, walnut, cashew; coconut protein, or proteins from algal, insect or microbial sources, or proteins produced via fermentation (i.e. precision fermentation) such as fermentative dairy milk protein or fermentative egg protein.

Preferably, the present cake mix does not comprise soy protein. Soy is undesired in view of its allergens.

In a preferred embodiment, the present cake mix further comprises at least one of the compounds selected from the group consisting of sodium bicarbonate, calcium, yeast extract, modified starch, lipase, emulsifier, thickening agent and/or amyloglucosidase.

The volume of a given cake can be determined by an automated bread volume analyser (eg. BVM-3, TexVol Instruments AB, Viken, Sweden), using ultrasound or laser detection as known in the art. In case the volume is increased, the property is improved. Alternatively, the cake height after baking in the same size tin is an indication of the cake volume. In case the cake height is increased, the cake volume has increased.

Typical ingredients of the cake mix are wheat flour and sugar. Optionally, baking powder, salt, water, emulsifiers (such as for example PGE's and monoglycerides), margarine, butter and/or oil are added (for example for pound cakes and muffins).

Also, components to improve water binding such as hydrocolloids or (modified) starch can be used. Preferably the present cake mix comprises starch or modified starch, preferably in an amount of 1 to 15 wt %, or 2 to 10 wt. %, or 3 to 9 wt. % of the cake mix. All types of modified starch can be used, for example modified potato starch or modified wheat starch. Preferably modified potato starch is used, such as for example disclosed in US 6,864,063. Most preferably modified potato starch is used which is obtained by treating potato starch with amylomaltase, more preferably with amylomaltase derived from *Bacillus amyloliquefaciens.* An example of modified potato starch obtained by treating potato starch with amylomaltase derived from *Bacillus amyloliquefaciens* is sold under the trademark Etenia^{®} (Avebe Food).

Optionally, the present cake mix comprises flavouring agents such as vanilla extract, cocoa powder or yeast extracts. An example of a suitable yeast extract is a yeast extract comprising at least 30% w/w 5' ribonucleotides on the basis of sodium free dry matter. Preferably a yeast extract is used which comprises at least 30% w/w 5'-ribonucleotides, preferably at least 34% w/w, 38% w/w, 40% w/w or 42% w/w, more preferably at least 44% w/w, 46% w/w, 48% w/w or at least 50% w/w 5'-ribonucleotides on the basis of sodium chloride free dry matter. It has been found that the use of such yeast extract not only improves the taste of the cake, but also has a surprising emulsifying effect, since upon its use, the viscosity of the batter improves.

In the context of the present disclosure, the phrase "5'-ribonucleotides" refers to the total amount of 5'-monophosphate ribonucleotides formed during RNA degradation, viz. 5'-monophosphate guanine (5'-GMP), 5'-monophosphate uracil (5'-UMP), 5'-monophosphate cytosine (5'-CMP), 5'-monophosphate adenine (5'-AMP), where 5'-AMP may be partially or completely converted into 5'-monophosphate inosine (5'-IMP). For example, in a yeast extract which comprises 30% w/w 5'-ribonucleotides on the basis of sodium chloride free dry matter, the total amount of 5'-GMP, 5'-UMP, 5'-CMP, 5'-AMP and 5'-IMP is 30% w/w on the basis of sodium chloride free dry matter.

In a preferred embodiment, a yeast extract is used wherein the total amount of 5'-GMP plus 5'-IMP is at least 15% w/w, preferably at least 17% w/w, 19% w/w, 20% w/w or 21% w/w, more preferably at least 22% w/w, 23% w/w, 24% w/w or 25% w/w, on the basis of sodium chloride free dry matter. Due to the constitution of RNA, from which the 5'-ribonucleotides arise, 5'-GMP and 5'-IMP will always be present in approximately equal amounts in this embodiment.

In the context of the present disclosure, weight percentage calculations of the 5'-ribonucleotides are based on the disodium salt heptahydrate thereof unless otherwise specified. All percentages are calculated on sodium chloride free dry matter. In the present disclosure, the phrase 'sodium chloride free dry matter' refers to the fact that for the calculation of the weight percentage the weight of any sodium chloride present is excluded from the composition. The measurement of sodium chloride in the composition and the above-mentioned calculation can be performed by methods known to those skilled in the art. An example of yeast extracts comprising 40% w/w 5'-ribonucleotides of which 20% w/w 5'-GMP plus 5'-IMP, weight percentages being based on sodium chloride free yeast extract dry matter, is sold under the trademark Maxarite^{®} Delite (DSM Food Specialties, The Netherlands).

It is possible to add enzymes to the cake mix. Examples of such enzymes are amylolytic enzymes like fungal alpha-amylase, bacterial amylases, anti-staling amylases, amyloglucosidases, lipolytic enzymes like lipases, more specifically phospholipases, such as phospholipase A2, galactolipases, proteolytic enzymes like endoproteases and exoproteases (carboxy- and aminopeptidases), redox enzymes (oxidases, etc.) and crosslinking enzymes (transglutaminase, etc).

In a preferred embodiment the present cake mix comprises:
- 20 to 40 wt. % sugar;
- 15 to 40 wt. % flour;
- 1 to 10 wt. % pea protein and rapeseed protein;
- 1 to 10 wt. % starch;
- 0.1 to 5 wt. % emulsifier; and/or
- 0.01 to 1 wt. % sodium bicarbonate;

Preferably with the proviso that the maximum amount does not exceed 100 wt. %.

According to another aspect, the present invention relates to a method to prepare a cake comprising the steps of:
a. preparing a batter of the cake by adding the cake mix of the present invention to water;
b. putting the batter in a suitable baking mold; and
c. baking the cake.

Preferably the amount of water in the batter is 10 to 40 wt. %, preferably 20 to 30 wt. %.

The cake mix can be a complete mix product ready for use provided by a manufacturer, or prepared by mixing the powdered components before adding the mix to the water. Alternatively, in step a) first the protein powders can be added to the water and allowed to be fully hydrated before the remaining components of the cake mix are added.

In a further step, an oil or fat phase can be added during or after the cake mix was dispersed into the water of step a.

According to another aspect, the present invention relates to the use of rapeseed protein in the production of a vegan cake comprising a legume derived protein, to improve the specific volume of the cake. Also disclosed herein for illustration purposes, but not forming part of the present invention, is the use of rapeseed protein in the production of a vegan cake to improve at least one of the properties selected from the group consisting of (i) batter viscosity, (ii) specific density, (iii) initial crumb softness, (iv) crumb pore homogeneity, (v) crumb pore diameter, (vi) crumb softness upon storage and/or (vii) shelf life.

Preferably, one of the properties is improved with at least 1, 2, 3, 4, 5, 6, 7, 8, 9, 10, 11, 12, 13, 14, 15, 16, 17, 18, 19, or at least 20%.

Preferably the specific volume is improved with at least 1, 2, 3, 4, 5, 6, 7, 8, 9, or at least 10%, preferably compared to a corresponding vegan cake comprising only pea protein.

In the use according to the present invention, the vegan cake comprises a legume derived protein, preferably pea protein.

Preferably, the vegan cake is a cake selected from the group of pound cake, butter cake, meringues, sponge cake, biscuit cake, roulade, genoise, muffin and chiffon cake. Preferably sponge cake.

In a preferred embodiment of the present use, the rapeseed protein comprises 40 to 65 wt. % cruciferins and 35 to 60 wt. % napins.

In a preferred embodiment of the present use, the rapeseed protein comprises 60 to 80 wt. % cruciferins and 20 to 40 wt. % napins.

In a preferred embodiment of the present use, the rapeseed protein comprises 0 to 10 wt. % cruciferins and 90 to 100 wt. % napins.

In a preferred embodiment of the present use, the rapeseed protein is a rapeseed protein isolate.

The term isolate means that on a dry basis, 85 wt. % of the total weight of the isolate is protein. This is calculated using the Kjeldahl method with a nitrogen conversion factor of 6.25. Typically, the non-protein content of the protein isolate includes non-protein compounds such as, fibre and/or other carbohydrates, minerals, anti-nutritional substances. Preferably the present protein isolate has a protein content of at least 90 wt.% (calculated as Kjeldahl N x 6.25) on a dry weight basis, preferably at least 91, 92, 93, 94, 95, 96, 97, 98, or at least 99 wt.% on a dry weight basis (calculated as Kjeldahl N x 6.25).

The invention is hereby illustrated with the following non-limiting example.

### Example 1

### The effect of rapeseed protein on vegan sponge cake specific volume, initial crumb softness and shelf life

For sponge cake production, batters were prepared from the ingredients as shown in table
1, with different ratios of pea protein (PP) and rapeseed protein (RP). The ingredients were mixed into a batter using a Hobart mixer provided with a wire whisk mixer for 1 minute at speed 1, 7 minutes at speed 3 and 1 minute at speed 1. Next, 175 g batter was put in an aluminium baking pan (diameter 15 cm) and baked for 19 minutes at 190°C (top temperature in the oven), 180°C (bottom temperature). After cooling down the sponge cakes were stored separately in polythene bags. Test 3 is according to the present invention, while Tests 1, 2, 4 and 5 are comparative examples, not according to the present invention.

**Table 1**

| **Raw material (in grams)** | **Test 1** | **Test 2** | **Test 3** | **Test 4** | **Test 5** |
|---|---|---|---|---|---|
| | **PP:RP** | **PP:RP** | **PP:RP** | **100% PP** | **100% RP** |
| | **50:50** | **25:75** | **75:25** | | |
| Water | 358,3 | 358,3 | 358,3 | 358,3 | 358,3 |
| Flour (Albatros) | 260,4 | 260,4 | 260,4 | 260,4 | 260,4 |
| Sugar | 351,4 | 351,4 | 351,4 | 351,4 | 351,4 |
| Starch | 91 | 91 | 91 | 91 | 91 |
| Emulpals 110 (emulsifier, Palsgaard) | 34 | 34 | 34 | 34 | 34 |
| Sodium bicarbonate | 4,7 | 4,7 | 4,7 | 4,7 | 4,7 |
| Levall 28 (Budenheim) | 6,5 | 6,5 | 6,5 | 6,5 | 6,5 |
| Xanthan | 0,8 | 0,8 | 0,8 | 0,8 | 0,8 |
| Pea protein isolate (DMPP80plus (Jianyuan, China, 80% protein) | 14 | 7 | 20 | 28 | 0 |
| Rapeseed protein isolate (according to WO2018/007492, 90% protein) | 14 | 21 | 8 | 0 | 28 |
| Total weight | 1135,1 | 1135,1 | 1135,1 | 1135,1 | 1135,1 |

The specific volume and the colour of the sponge cakes were analysed. Colour was assessed visually. Specific volume was assessed by a laser volumeter from TexVol instrument (Perten).

The results are shown in table 2 below.

**Table 2**

| **Test** | **Specific volume (ml/g)** | **Colour (1= very light, 5=very dark)** |
|---|---|---|
| 1 PP:RP 50:50 | 2,61 | 4 |
| 2 PP:RP 25:75 | 2,40 | 5 |
| 3 PP:RP 75:25 | 3,24 | 3 |
| 4 100% PP | 3,03 | 1 |
| 5 100% RP | 2,33 | 5 |

From these results it is clear that addition of rapeseed protein improves the specific volume and colour of vegan sponge cakes with pea protein.

## Claims

1. A cake mix comprising:
i. sugar;
ii. flour; and
iii. pea protein and rapeseed protein;
wherein the ratio of pea protein to rapeseed protein is within the range of 61:39 to 94:6 w/w preferably 71:29 to 94:6 w/w.

2. A cake mix according to claim 1, wherein the sum of the pea protein and rapeseed protein is between 1 and 10 wt. % of the cake mix.

3. A cake mix according to claim 1 or 2, wherein the rapeseed protein comprises 40 to 65 wt. % cruciferins and 35 to 60 wt. % napins.

4. A cake mix according claim 1 or 2, wherein the rapeseed protein comprises 60 to 80 wt. % cruciferins and 20 to 40 wt. % napins.

5. A cake mix according to claim 1 or 2, wherein the rapeseed protein comprises 0 to 10 wt. % cruciferins and 90 to 100 wt. % napins.

6. A cake mix according to any of the preceding claims, wherein the rapeseed protein is a rapeseed protein isolate and/or wherein the pea protein is a pea protein isolate.

7. A cake mix according to any of the preceding claims, further comprising at least one of the compounds selected from the group consisting of sodium bicarbonate, calcium, yeast extract, modified starch, lipase, emulsifier, thickening agent and/or amyloglucosidase.

8. A method to prepare a cake comprising the steps of:
a. preparing the batter of the cake by adding the cake mix as defined in any of the claims 1 to 7 to water;
b. putting the batter in a suitable baking mold; and
c. baking the cake.

9. The use of rapeseed protein in the production of a vegan cake comprising a legume derived protein, to improve the specific volume of the cake.

10. The use of rapeseed protein according to claim 9, wherein the vegan cake comprises pea protein.

11. The use of rapeseed protein according to claim 9 or 10, wherein the cake is sponge cake.

12. The use of rapeseed protein according to claim 9 or 10, wherein the rapeseed protein comprises 40 to 65 wt. % cruciferins and 35 to 60 wt. % napins.

13. The use of rapeseed protein according to claim 9 or 10, wherein the rapeseed protein comprises 60 to 80 wt. % cruciferins and 20 to 40 wt. % napins.

14. The use of rapeseed protein according to claim 9 or 10, wherein the rapeseed protein comprises 0 to 10 wt. % cruciferins and 90 to 100 wt. % napins.

15. The use of rapeseed protein according to any of the claims 9 to 14, wherein the rapeseed protein is a rapeseed protein isolate.

## Patentansprüche

1. Kuchenmischung umfassend:
i. Zucker;
ii. Mehl; und
iii. Erbsenprotein und Rapsprotein;
wobei das Verhältnis von Erbsenprotein zu Rapsprotein in dem Bereich von 61:39 bis 94:6 w/w, vorzugsweise 71:29 bis 94:6 w/w, liegt.

2. Kuchenmischung nach Anspruch 1, wobei die Summe von Erbsenprotein und Rapsprotein zwischen 1 und 10 Gew.-% der Kuchenmischung beträgt.

3. Kuchenmischung nach Anspruch 1 oder 2, wobei das Rapsprotein 40 bis 65 Gew.-% Cruciferine und 35 bis 60 Gew.-% Napine umfasst.

4. Kuchenmischung nach Anspruch 1 oder 2, wobei das Rapsprotein 60 bis 80 Gew.-% Cruciferine und 20 bis 40 Gew.-% Napine umfasst.

5. Kuchenmischung nach Anspruch 1 oder 2, wobei das Rapsprotein 0 bis 10 Gew.-% Cruciferine und 90 bis 100 Gew.-% Napine umfasst.

6. Kuchenmischung nach einem der vorstehenden Ansprüche, wobei das Rapsprotein ein Rapsproteinisolat ist und/oder wobei das Erbsenprotein ein Erbsenproteinisolat ist.

7. Kuchenmischung nach einem der vorstehenden Ansprüche, ferner umfassend wenigstens eine der Verbindungen ausgewählt aus der Gruppe bestehend aus Natriumbicarbonat, Calcium, Hefeextrakt, modifizierter Stärke, Lipase, Emulgator, Verdickungsmittel und/oder Amyloglucosidase.

8. Verfahren zur Herstellung eines Kuchens, umfassend die Schritte:
a. Herstellen des Backteigs des Kuchens durch Zugeben der Kuchenmischung nach einem der Ansprüche 1 bis 7 zu Wasser;
b. Legen des Backteigs in eine geeignete Backform; und
c. Backen des Kuchens.

9. Verwendung von Rapsprotein bei der Herstellung eines veganen Kuchens, der ein aus Hülsenfrüchten stammendes Protein umfasst, zum Verbessern des spezifischen Volumens des Kuchens.

10. Verwendung von Rapsprotein nach Anspruch 9, wobei der vegane Kuchen Erbsenprotein umfasst.

11. Verwendung von Rapsprotein nach Anspruch 9 oder 10, wobei der Kuchen Biskuitkuchen ist.

12. Verwendung von Rapsprotein nach Anspruch 9 oder 10, wobei das Rapsprotein 40 bis 65 Gew.-% Cruciferine und 35 bis 60 Gew.-% Napine umfasst.

13. Verwendung von Rapsprotein nach Anspruch 9 oder 10, wobei das Rapsprotein 60 bis 80 Gew.-% Cruciferine und 20 bis 40 Gew.-% Napine umfasst.

14. Verwendung von Rapsprotein nach Anspruch 9 oder 10, wobei das Rapsprotein 0 bis 10 Gew.-% Cruciferine und 90 bis 100 Gew.-% Napine umfasst.

15. Verwendung von Rapsprotein nach einem der Ansprüche 9 bis 14, wobei das Rapsprotein ein Rapsproteinisolat ist.

## Revendications

1. Mélange pour gâteau comprenant :
i. du sucre ;
ii. de la farine ; et
iii. des protéines de pois et de colza ;
dans lequel le rapport des protéines de pois sur les protéines de colza se situe dans la plage de 61:39 à 94:6 p/p, de préférence 71:29 à 94:6 p/p.

2. Mélange pour gâteau selon la revendication 1, dans lequel la somme des protéines de pois et des protéines de colza est comprise entre 1 et 10 % en poids du mélange pour gâteau.

3. Mélange pour gâteau selon la revendication 1 ou 2, dans lequel les protéines de colza comprennent 40 à 65 % en poids de cruciférines et 35 à 60 poids % de napines.

4. Mélange pour gâteau selon la revendication 1 ou 2, dans lequel les protéines de colza comprennent 60 à 80 % en poids de cruciférines et 20 à 40 poids % de napines.

5. Mélange pour gâteau selon la revendication 1 ou 2, dans lequel les protéines de colza comprennent 0 à 10 % en poids de cruciférines et 90 à 100 poids % de napines.

6. Mélange pour gâteau selon l'une quelconque des revendications précédentes, dans lequel les protéines de colza sont un isolat de protéines de colza et/ou dans lequel les protéines de pois sont un isolat de protéines de pois.

7. Mélange pour gâteau selon l'une quelconque des revendications précédentes, comprenant en outre au moins un des composés choisis dans le groupe constitué par le bicarbonate de sodium, le calcium, un extrait de levure, un amidon modifié, une lipase, un émulsifiant, un épaississant et/ou une amyloglucosidase.

8. Procédé de préparation d'un gâteau comprenant les étapes de :
a. préparation de la pâte du gâteau en ajoutant le mélange pour gâteau tel que défini dans l'une quelconque des revendications 1 à 7 à de l'eau ;
b. mise de la pâte dans un moule de cuisson approprié ; et
c. cuisson du gâteau.

9. Utilisation de protéines de colza dans la production d'un gâteau végan comprenant des protéines dérivées de légumineuse, pour améliorer le volume spécifique du gâteau.

10. Utilisation de protéines de colza selon la revendication 9, dans laquelle le gâteau végan comprend des protéines de pois.

11. Utilisation de protéines de colza selon la revendication 9 ou 10, dans laquelle le gâteau est une génoise.

12. Utilisation de protéines de colza selon la revendication 9 ou 10, dans laquelle les protéines de colza comprennent 40 à 65 % en poids de cruciférines et 35 à 60 poids % de napines.

13. Utilisation de protéines de colza selon la revendication 9 ou 10, dans laquelle les protéines de colza comprennent 60 à 80 % en poids de cruciférines et 20 à 40 poids % de napines.

14. Utilisation de protéines de colza selon la revendication 9 ou 10, dans laquelle les protéines de colza comprennent 0 à 10 % en poids de cruciférines et 90 à 100 poids % de napines.

15. Utilisation de protéines de colza selon l'une quelconque des revendications 9 à 14, dans laquelle les protéines de colza sont un isolat de protéines de colza.
